# EUROPEAN PATENT APPLICATION

(11) **EP 4 178 313 A1**
(43) Date of publication of application: **10.05.2023**
(21) Application number: 21833257.5
(22) Date of filing: 23.06.2021
(51) Int. Cl.: H04W 76/36

(54) **USER PLANE STATE SYNCHRONIZATION METHOD AND APPARATUS**

(30) Priority: 01.07.2020 CN 202010619022
(71) Applicant: ZTE Corporation, Shenzhen, Guangdong 518057 (CN)
(72) Inventor: FANG, Haibao, Shenzhen, Guangdong 518057 (CN); ZHANG, Luyao, Shenzhen, Guangdong 518057 (CN); WANG, Pingchun, Shenzhen, Guangdong 518057 (CN); YAN, Yongcheng, Shenzhen, Guangdong 518057 (CN); CAO, Zhongyi, Shenzhen, Guangdong 518057 (CN)
(74) Representative: Canzler & Bergmeier Patentanwälte Partnerschaft mbB
(86) International application number: PCT/CN2021/101851
(87) International publication number: WO 2022/001785

(57) **Abstract**

Provided are a user plane state synchronization method and apparatus. The method comprises: a core network receiving a trigger message sent by a user plane when it is detected that the user plane cannot normally transmit data; and after receiving the trigger message, the core network instructing a base station of the user plane to re-establish a protocol data unit (PDU) resource by means of performing release and establishment in sequential order, so that user plane state synchronization between the core network and the base station is realized.

## Description

### CROSS-REFERENCE TO RELATED APPLICATIONS

This application claims the priority to the patent application No. 202010619022.1 filed with the Chinese Patent Office on July 1, 2020, the entire contents of which are incorporated hereby by reference.

### TECHNICAL FIELD

The present disclosure relates to, but is not limited to, the field of mobile communication technology.

### BACKGROUND

In a communication system, the main network elements of a user plane include a terminal, a base station, and a user plane function (UPF). Conventionally, user plane state synchronization between a session management function (SMF) of the control plane and the base station and the terminal is implemented by AN Release (access network release) and Service Request (see 3GPP 23.502 protocol).

### SUMMARY

The present disclosure provides a user plane state synchronization method, including: receiving, by a core network, a trigger message sent from a user plane upon detecting that the user plane is not able to transmit data normally; and instructing, by the core network after receiving the trigger message, a base station of the user plane to re-establish a protocol data unit (PDU) resource by means of performing release and setup in sequential order, so that user plane state synchronization between the core network and the base station is realized.

The present disclosure further provides a user plane state synchronization method, including: detecting whether the user plane is able to transmit data normally; sending, upon detecting that the user plane is not able to transmit data normally, a trigger message to a core network to trigger the core network to instruct a base station of the user plane to re-establish a protocol data unit (PDU) resource by means of performing release and setup in sequential order, so that user plane state synchronization between the core network and the base station is realized.

The present disclosure further provides a user plane state synchronization apparatus, including: a receiving module configured to receive, at a core network, a trigger message sent from a user plane upon detecting that the user plane is not able to transmit data normally; and a control module configured to instruct, after receiving the trigger message at the core network, a base station of the user plane to re-establish a protocol data unit (PDU) resource by means of performing release and setup in sequential order, so that user plane state synchronization between the core network and the base station is realized.

The present disclosure further provides a user plane state synchronization apparatus, including: a detection module configured to detect whether the user plane is able to transmit data normally; and a trigger module configured to send, upon detecting that the user plane is not able to transmit data normally, a trigger message to a core network to trigger the core network to instruct a base station of the user plane to re-establish a protocol data unit (PDU) resource by means of performing release and setup in sequential order, so that user plane state synchronization between the core network and the base station is realized.

### BRIEF DESCRIPTION OF DRAWINGS

FIG. 1 is a flowchart of a user plane state synchronization method according to the present disclosure;
FIG. 2 is a flowchart of a user plane state synchronization method according to the present disclosure;
FIG. 3 is a block diagram of a communication system;
FIG. 4 is an interaction flowchart of the present disclosure applied to a paging scenario;
FIG. 5 is an interaction flowchart of the present disclosure applied to a service request process;
FIG. 6 is a schematic block diagram of a user plane state synchronization apparatus according to the present disclosure; and
FIG. 7 is a schematic block diagram of a user plane state synchronization apparatus according to the present disclosure.

### DETAIL DESCRIPTION OF EMBODIMENTS

It will be appreciated that the specific implementations described herein are merely for illustration of the present disclosure and are not intended to limit the present disclosure.

In the description below, suffixes representing elements, such as "module", "component" or "unit", are used only for the convenience of explanation of the present disclosure, and have no specific meaning by themselves. Thus, "module", "component" or "unit" may be used interchangeably.

In a communication system, the main network elements of a user plane include a terminal, a base station, and a user plane function (UPF). Conventionally, user plane state synchronization between a session management function (SMF) of the control plane and the base station and the terminal is implemented by AN Release and Service Request (see 3GPP 23.502 protocol). However, if the system is abnormal, resulting in inconsistent user plane states between the SMF and the base station and the terminal, the SMF cannot acquire the real state of the user plane. When the SMF is triggered by a certain process to instruct a base station to establish a protocol data unit (PDU) resource, if the PDU resource is already present at the base station, the setup of the PDU resource will fail.

Therefore, the present disclosure provides a user plane state synchronization method and apparatus, which can at least solve the problem that the SMF cannot acquire the actual state of the user plane, and the problem of inconsistent user plane states between the core network and the base station.

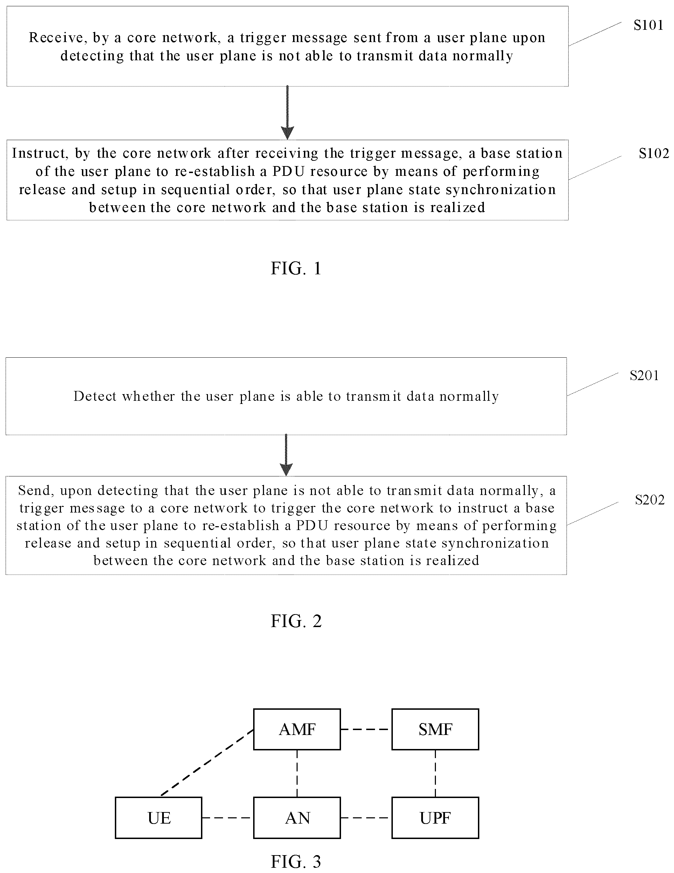

FIG. 1 is a flowchart of a user plane state synchronization method according to the present disclosure. As shown in FIG. 1, the method may include operations S101 and S102.

At operation S101, a core network receives a trigger message sent from a user plane upon detecting that the user plane is not able to transmit data normally.

The trigger message may be a downlink data report message. For example, the core network receives a downlink data report message generated and sent by the UPF upon detecting that a downlink of the user plane is not able to transmit data normally.

The trigger message may also be a service request message. For example, the core network receives a service request message generated and sent by a terminal of the user plane upon detecting that an uplink of the user plane is not able to transmit data normally.

At operation S102, after receiving the trigger message, the core network instructs a base station of the user plane to re-establish a protocol data unit (PDU) resource by means of performing release and setup in sequential order, so that user plane state synchronization between the core network and the base station is realized.

Exemplarily, after receiving the trigger message, the core network sends a PDU resource release message to the base station, so that the base station releases the established PDU resource, and sends, after sending the PDU resource release message to the base station, a PDU resource setup request message to the base station, so that the base station establishes the PDU resource according to the request message.

The above operations S101 and S102 in this implementation may be applied to the network element SMF of the core network.

According to the present disclosure, under the condition that the user plane states of the communication system are inconsistent, the core network re-establishes the PDU resource by means of performing release and setup in sequential order, so as to solve the problem of inconsistent user plane states in the communication system.

FIG. 2 is a flowchart of a user plane state synchronization method according to the present disclosure. As shown in FIG. 2, the method may include operations S201 and S202.

At operation S201, it is detected whether the user plane is able to transmit data normally.

Exemplarily, when a user plane function (UPF) of the user plane is to transmit downlink data, the UPF detects whether a downlink of the user plane is able to transmit data normally. When a terminal of the user plane is to transmit uplink data, the terminal detects whether an uplink of the user plane is able to transmit data normally.

At operation S202, upon detecting that the user plane is not able to transmit data normally, a trigger message is sent to a core network to trigger the core network to instruct a base station of the user plane to re-establish a protocol data unit (PDU) resource by means of performing release and setup in sequential order, so that user plane state synchronization between the core network and the base station is realized.

The trigger message may be a downlink data report message. Exemplarily, when the UPF detects that the downlink of the user plane is not able to transmit data normally, a downlink data report message is generated and sent to the core network so that the core network re-establishes the PDU resource by sending a PDU resource release message and a PDU resource setup request message sequentially to the base station of the user plane.

The trigger message may also be a service request message. Exemplarily, when the terminal detects that the uplink of the user plane is not able to transmit data normally, a service request message is generated and sent to the core network so that the core network re-establishes the PDU resource by sending a PDU resource release message and a PDU resource setup request message sequentially to the base station of the user plane.

As can be seen from this implementation, the above operations S201 and S202 in this implementation may be applied to a terminal or UPF of the user plane.

According to the present disclosure, under the condition that the user plane states of the communication system are inconsistent, the user plane triggers the core network through a paging process or service request process to re-establish the PDU resource by means of performing release and setup in sequential order, so as to solve the problem of inconsistent user plane states in the communication system.

The SMF service process prevents the base station from repeatedly establishing the PDU resource, including the following scenario 1 and scenario 2.

In scenario 1, the UPF triggers a paging process, in which the SMF firstly sends a PDU resource release message to the base station through an interface provided by the access and mobility management function (AMF), and then sends a PDU resource setup request to the base station through the interface of the AMF.

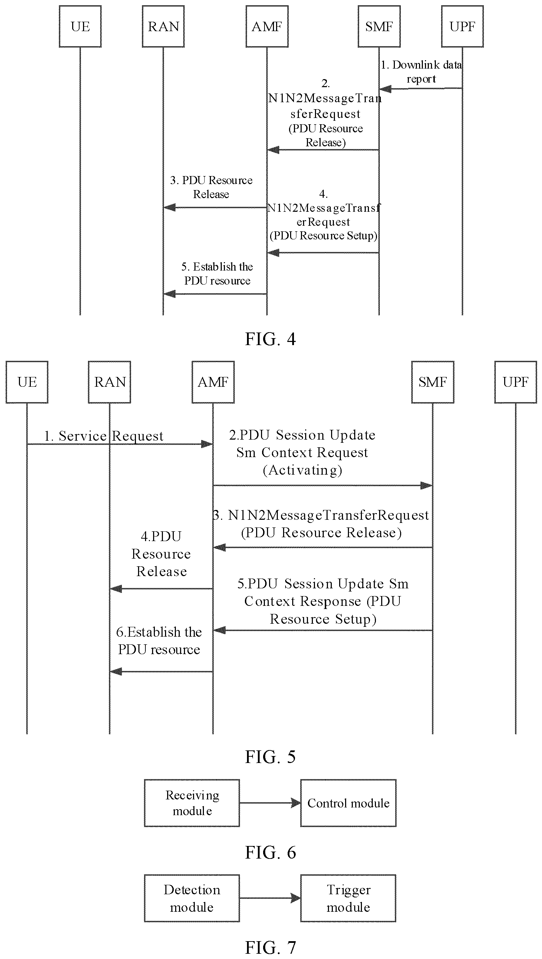

In this scenario, when the UPF has a downlink data packet to be transmitted, a user plane downlink exception (blocking) is detected, which is reported to the SMF so that the SMF establishes the PDU resource by means of performing release and setup in sequential order. The specific process is as shown in FIGs. 3 and 4, and may include the following operations 1 to 6:

In operation 1, when the UPF has a downlink data packet to be transmitted, a user plane downlink exception (blocking) is detected and reported to the SMF.

In operation 2, the SMF is unable to know whether the PDU resource is present at the base station, and firstly sends a PDU resource release message to the RAN (or base station) through an N1N2MessageTransferRequest interface provided by the AMF.

In operation 3, the AMF sends the PDU resource release message to the RAN (or base station) unconditionally.

In operation 4, the SMF continues the paging process no matter whether a release response from the RAN is received, and then sends a PDU resource setup request to the RAN (or base station) through the N1N2MessageTransferRequest interface provided by the AMF.

In operation 5, after receiving the N1N2MessageTransferRequest carrying the PDU resource setup request, the AMF processes the paging process normally, and sends the PDU resource setup request to the RAN (or base station).

In scenario 2, the terminal triggers a service request process, in which the SMF firstly sends a PDU resource release message to the base station through an interface provided by the AMF, and then sends a PDU resource setup request to the base station through a respond to the AMF. The AMF is desired to firstly process a request message including the PDU resource release message.

In this scenario, when the terminal is to transmit uplink user plane data, and a user plane blocking is detected, a service request process is initiated so that the SMF, after receiving the request, establishes the PDU resource by means of performing release and setup in sequential order. The specific process is as shown in FIGs. 3 and 5, and may include the following operations 1 to 5:

In operation 1, a terminal initiates a service request and establishes a user plane channel (see the 3GPP 23.502 protocol).

In operation 2, the SMF receives a service request message (i.e., PDU Session Update Sm Context Request (Activating)).

In operation 3, the SMF is unable to know whether the PDU resource is present at the base station, and firstly sends a PDU resource release message to the RAN (or base station) through an N1N2MessageTransferRequest interface provided by the AMF.

In operation 4, the AMF sends the PDU resource release message to the RAN (or base station) unconditionally.

In operation 5, the SMF continues the service request process no matter whether a release response from the RAN is received, and then sends a PDU resource setup request to the RAN (or base station) through a response message (i.e., PDU Session Update Sm Context Response) to the AMF.

In operation 6, the AMF, after receiving a response message carrying the PDU resource setup request, processes the service request process normally.

According to the present disclosure, under the condition that the user plane states of the communication system are inconsistent, the SMF of the core network prevents the base station from repeatedly establishing the PDU resource by means of releasing the PDU resource first and then establishing the PDU resource, so as to solve the problem of inconsistent user plane states in the communication system.

It should be noted that, according to the present disclosure, the inconsistent user plane states in the communication system are restored during implementation of the service process independent of behavior constraints on the base station and the terminal, and thus does not affect normal implementation of the service.

FIG. 6 is a schematic block diagram of a user plane state synchronization apparatus according to the present disclosure. As shown in FIG. 6, the apparatus is applied to a network element of the core network, for example, to an SMF, and the apparatus may include a receiving module and a control module.

The receiving module is configured to receive, at a core network, a trigger message sent from a user plane upon detecting that the user plane is not able to transmit data normally. The trigger message may be a downlink data report message, and the receiving module receives a downlink data report message generated and sent by the UPF upon detecting that a downlink of the user plane is not able to transmit data normally. The trigger message may also be a service request message, and the receiving module receives a service request message generated and sent by a terminal of the user plane upon detecting that an uplink of the user plane is not able to transmit data normally.

The control module is configured to instruct, after receiving the trigger message at the core network, a base station of the user plane to re-establish a protocol data unit (PDU) resource by means of performing release and setup in sequential order, so that user plane state synchronization between the core network and the base station is realized. Exemplarily, after the core network receives the trigger message, the control module sends a PDU resource release message to the base station, so that the base station releases the established PDU resource, and sends, after sending the PDU resource release message to the base station, a PDU resource setup request message to the base station, so that the base station establishes the PDU resource according to the request message.

According to the user plane state synchronization apparatus of the present disclosure, under the condition that the user plane states of the communication system are inconsistent, the core network re-establishes the PDU resource by means of performing release and setup in sequential order, so as to solve the problem of inconsistent user plane states in the communication system.

FIG. 7 is a schematic block diagram of a user plane state synchronization apparatus according to the present disclosure. As shown in FIG. 7, the apparatus is applied to a user plane, for example, to a UPF, a terminal or the like, and the apparatus may include a detection module and a trigger module.

The detection module is configured to detect whether the user plane is able to transmit data normally.

The trigger module is configured to send, upon detecting that the user plane is not able to transmit data normally, a trigger message to a core network to trigger the core network to instruct a base station of the user plane to re-establish a protocol data unit (PDU) resource by means of performing release and setup in sequential order, so that user plane state synchronization between the core network and the base station is realized.

In an implementation, the apparatus is applied to a UPF, and the detection module detects whether the downlink of the user plane can normally transmit data when the UPF is to transmit downlink data. When it is detected that the downlink of the user plane is not able to transmit data normally, the trigger module generates a trigger message (i.e., a downlink data report message) and sends the downlink data report message to the core network so that the core network re-establishes the PDU resource by sending a PDU resource release message and a PDU resource setup request message sequentially to the base station of the user plane.

In an implementation, the apparatus is applied to a terminal, and the detection module detects whether the uplink of the user plane can normally transmit data when the terminal is to transmit uplink data. When it is detected that the uplink of the user plane is not able to transmit data normally, the trigger module generates a trigger message (i.e., a service request message) and sends the service request message to the core network so that the core network re-establishes the PDU resource by sending a PDU resource release message and a PDU resource setup request message sequentially to the base station of the user plane.

According to the apparatus of the present disclosure, under the condition that the user plane states of the communication system are inconsistent, the user plane triggers the core network through a paging process or service request process to re-establish the PDU resource by means of performing release and setup in sequential order, so as to solve the problem of inconsistent user plane states in the communication system.

Those of ordinary skill in the art will appreciate that all or some operations of the above-described method, functional modules/units in the system and device may be implemented as software, firmware, hardware, and suitable combinations thereof.

In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and communication medium (or transitory medium). The term computer storage medium includes volatile and nonvolatile, removable and non-removable media implemented in any method or technology for storage of information such as computer-readable instructions, data structures, program modules or other data, as is well known to those of ordinary skill in the art. The computer storage medium includes, but is not limited to, an RAM, an ROM, an EEPROM, a flash or any other memory technology, a CD-ROM, a digital versatile disc (DVD) or any other optical disc storage, a magnetic cartridge, a magnetic tape, a magnetic disk storage or any other magnetic storage device, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

The exemplary implementations of the present disclosure have been described above with reference to the accompanying drawings, but the scope of the present disclosure is not limited thereby. Any modifications, equivalent substitutions, and improvements made by those skilled in the art without departing from the scope and spirit of the present disclosure are intended to be within the scope of the claims of the present disclosure.

## Claims

1. A user plane state synchronization method, comprising:
receiving, by a core network, a trigger message sent from a user plane upon detecting that the user plane is not able to transmit data normally; and
instructing, by the core network after receiving the trigger message, a base station of the user plane to re-establish a protocol data unit, PDU, resource by means of performing release and setup in sequential order, so that user plane state synchronization between the core network and the base station is realized.

2. The method according to claim 1, wherein the trigger message is a downlink data report message; and
receiving, by the core network, the trigger message sent from the user plane upon detecting that the user plane is not able to transmit data normally comprises:
receiving, by the core network, the downlink data report message generated and sent by a user plane function, UPF, of the user plane upon detecting that a downlink of the user plane is not able to transmit data normally.

3. The method according to claim 1, wherein the trigger message is a service request message; and
receiving, by the core network, the trigger message sent from the user plane upon detecting that the user plane is not able to transmit data normally comprises:
receiving, by the core network, the service request message generated and sent by a terminal of the user plane upon detecting that an uplink of the user plane is not able to transmit data normally.

4. The method according to any of claims 1 to 3, wherein instructing, by the core network after receiving the trigger message, the base station of the user plane to re-establish the PDU resource by means of performing release and setup in sequential order, so that user plane state synchronization between the core network and the base station is realized comprises:
sending, by the core network after receiving the trigger message, a PDU resource release message to the base station, so that the base station releases an established PDU resource; and
sending, by the core network after sending the PDU resource release message to the base station, a PDU resource setup request message to the base station, so that the base station establishes the PDU resource according to the request message.

5. A user plane state synchronization method, comprising:
detecting whether the user plane is able to transmit data normally;
sending, upon detecting that the user plane is not able to transmit data normally, a trigger message to a core network to trigger the core network to instruct a base station of the user plane to re-establish a protocol data unit, PDU, resource by means of performing release and setup in sequential order, so that user plane state synchronization between the core network and the base station is realized.

6. The method according to claim 5, wherein detecting whether the user plane is able to transmit data normally comprises:
detecting by a user plane function, UPF, of the user plane, when the UPF is to transmit downlink data, whether a downlink of the user plane is able to transmit data normally; or
detecting by a terminal of the user plane, when the terminal is to transmit uplink data, whether an uplink of the user plane is able to transmit data normally.

7. The method according to claim 6, wherein the trigger message is a downlink data report message; and
sending, upon detecting that the user plane is not able to transmit data normally, the trigger message to the core network to trigger the core network to instruct the base station of the user plane to re-establish the PDU resource by means of performing release and setup in sequential order, so that user plane state synchronization between the core network and the base station is realized comprises:
generating, when the UPF detects that the downlink of the user plane is not able to transmit data normally, the downlink data report message, and sending the downlink data report message to the core network so that the core network re-establishes the PDU resource by sending a PDU resource release message and a PDU resource setup request message sequentially to the base station of the user plane.

8. The method according to claim 6, wherein the trigger message is a service request message; and
sending, upon detecting that the user plane is not able to transmit data normally, the trigger message to the core network to trigger the core network to instruct the base station of the user plane to re-establish the PDU resource by means of performing release and setup in sequential order, so that user plane state synchronization between the core network and the base station is realized comprises:
generating, when the terminal detects that the uplink of the user plane is not able to transmit data normally, the service request message, and sending the service request message to the core network so that the core network re-establishes the PDU resource by sending a PDU resource release message and a PDU resource setup request message sequentially to the base station of the user plane.

9. A user plane state synchronization apparatus, comprising:
a receiving module configured to receive, at a core network, a trigger message sent from a user plane upon detecting that the user plane is not able to transmit data normally; and
a control module configured to instruct, after receiving the trigger message at the core network, a base station of the user plane to re-establish a protocol data unit, PDU, resource by means of performing release and setup in sequential order, so that user plane state synchronization between the core network and the base station is realized.

10. A user plane state synchronization apparatus, comprising:
a detection module configured to detect whether the user plane is able to transmit data normally; and
a trigger module configured to send, upon detecting that the user plane is not able to transmit data normally, a trigger message to a core network to trigger the core network to instruct a base station of the user plane to re-establish a protocol data unit, PDU, resource by means of performing release and setup in sequential order, so that user plane state synchronization between the core network and the base station is realized.
